# FASCICULE DE BREVET EUROPEEN

(11) **EP 1 866 719 B1**
(45) Date de publication et mention de la délivrance du brevet: **03.06.2009**
(21) Numéro de dépôt: 06726172.7
(22) Date de dépôt: 03.04.2006
(51) Int. Cl.: G05D 23/02

(54) **ELEMENT THERMOSTATIQUE, NOTAMMENT POUR THERMOSTAT DE CIRCUIT DE REFROIDISSEMENT, ET PROCEDE DE FABRICATION D'UN TEL ELEMENT**
THERMOSTATISCHES ELEMENT INSBESONDERE FÜR EINEN KÜHLKREISLAUF UND VERFAHREN ZU SEINER HERSTELLUNG
THERMOSTATIC ELEMENT, IN PARTICULAR, FOR A COOLING CIRCUIT AND A METHOD FOR THE PRODUCTION THEREOF

(30) Priorité: 04.04.2005 FR 0503296
(43) Date de publication de la demande: 19.12.2007
(73) Titulaire: Vernet, 91340 Ollainville (FR)
(72) Inventeur: MAS, René, 91220 Bretigny sur Orge (FR)
(74) Mandataire: Grand, Guillaume
(86) Numéro de dépôt international: PCT/FR2006/000728
(87) Numéro de publication internationale: WO 2006/106219

(56) Documents cités:
- FR-A- 1 402 207
- US-A- 3 080 756
- US-A- 3 153 933
- US-A- 3 188 867

## Description

La présente invention concerne un élément thermostatique qui, en utilisant une matière thermodilatable, transforme une énergie calorifique en une énergie mécanique. Elle concerne également un procédé de fabrication d'un tel élément.

Ces éléments sont couramment utilisés dans le domaine de la régulation de fluide puisqu'ils permettent de répartir une voie d'alimentation fluidique en une ou plusieurs voies de distribution, en fonction de la chaleur du fluide à réguler et/ou d'une autre source de chaleur. Ces éléments sont ainsi agencés au sein de circuit de refroidissement dans lesquels circule un fluide de refroidissement, notamment les circuits de refroidissement associés à un moteur thermique de véhicule automobile ou analogue.

Typiquement, un élément thermostatique comporte une coupelle métallique de forme générale cylindrique et contenant une matière thermodilatable telle qu'une cire. L'élément comporte également un piston sensiblement coaxial à la coupelle et déplaçable en translation par rapport à cette coupelle sous l'effet de la dilatation de la matière thermodilatable contenue dans la coupelle, lorsque cette matière est échauffée. En se dilatant, la matière thermodilatable chasse en partie le piston, de sorte que ce dernier se déploie à l'extérieur de la coupelle tandis que, lors du refroidissement de la matière thermodilatable, le piston peut être escamoté à l'intérieur de la coupelle, généralement sous l'action d'un ressort de rappel associé à l'élément thermostatique. Pour guider les déplacements en translation du piston, l'élément thermostatique comporte un guide métallique alésé à l'intérieur duquel coulisse le piston, ce guide étant fermement solidarisé à la coupelle. En outre, pour éviter que la matière thermodilatable ne s'échappe de la coupelle lors des mouvements du piston, cette matière est étanchée vis-à-vis de l'extérieur, les moyens d'étanchéité utilisés étant souvent prévus pour transmettre au piston la poussée de la matière échauffée.

Traditionnellement, l'étanchement de la matière thermodilatable est assuré par une structure composite interposée entre la matière dilatable et l'extrémité du piston plongeant dans la coupelle. Cette structure comporte généralement un diaphragme souple de retenue de la cire, immobilisé fermement sur le guide, un tampon déformable logé dans l'alésage du guide et en contact contre la surface du diaphragme opposée à la masse de cire, et une rondelle insérée entre le tampon et le piston de manière ajustée pour empêcher le fluage de la matière constituant le tampon autour du piston. Cette conception « sandwich » est bien adaptée à l'utilisation d'une cire fortement dilatable pour provoquer un mouvement ample du piston.

Cependant, cette structure composite d'étanchement est délicate à assembler puisque chacune de ses pièces constitutives doit être successivement manipulées, mises en place et, le cas échéant, immobilisées, au sein de l'élément thermostatique. Ces manipulations sont d'autant plus complexes que ces pièces sont de faibles dimensions, ce qui augmente, d'une part, le temps d'assemblage des éléments thermostatiques et, d'autre part, le coût des lignes d'assemblage dont les automates doivent être précis. Il en résulte que le prix unitaire des éléments thermostatiques est relativement élevé si l'on veut obtenir des éléments de bonne fiabilité.

Par US-A-3 080 756, US-A-3 712 053 et FR-A-1 232 776, on connaît des éléments thermostatiques dans lesquels l'étanchement de la cire thermodilatable est assuré par un ensemble composite d'un seul tenant, incluant un insert métallique de guidage du piston de l'élément thermostatique, noyé dans une enveloppe souple et étanche. Dans US-A-3 080 756 et US-A-3 712 053, cette enveloppe est interposée entre l'insert et, d'une part, le piston et, d'autre part, la coupelle de l'élément thermostatique, tandis que, dans FR-A-1 232 776, une gaine en tissu recouvre l'essentiel du piston de l'élément thermostatique, ce qui rend ce dernier difficile à assembler, notamment le long d'une chaîne d'assemblage automatisée. Dans tous les cas, les inserts de ces ensembles d'un seul tenant présentent, du côté de la cire, une face totalement plate, entre laquelle et une partie en regard de la collerette est prévue une partie d'enveloppe correspondante. Cette partie d'enveloppe est critique du point de vue de l'étanchement de la cire car, en service, la forte pression qui règne à l'intérieur de la coupelle tend à en altérer l'étanchéité. En pratique, le dimensionnement et la réalisation de cette partie d'enveloppe sont déterminants du point de vue de l'étanchéité des éléments thermostatiques envisagés dans les trois documents précités, de sorte que l'assemblage de ces éléments le long de chaînes automatisées est incompatible avec un niveau de fiabilité élevé.

Le but de la présente invention est de proposer un nouvel élément thermostatique qui, tout en étant aussi fiable que les éléments existants, soit plus facile, plus rapide et moins coûteux à fabriquer, notamment avec des chaînes d'assemblage automatiques.

A cet effet, l'invention a pour objet un élément thermostatique, comprenant :
- une coupelle thermoconductrice contenant une matière thermodilatable,
- un piston déplaçable le long d'un axe par rapport à la coupelle sous l'action de la matière thermodilatable lors de la dilatation de cette matière,
- un ensemble d'un seul tenant comportant un insert rigide de guidage du piston par rapport à la coupelle, noyé dans une enveloppe souple étanche à la matière thermodilatable et interposée entre l'insert et, d'une part, le piston et, d'autre part, la coupelle,
caractérisé en ce que l'insert inclut une butée de positionnement de l'ensemble d'un seul tenant par rapport à la coupelle, laquelle butée s'étend en saillie vers la matière thermodilatable depuis une partie sensiblement plane du reste de l'insert suivant une direction sensiblement parallèle à l'axe de déplacement du piston, l'espace délimité, du côté de l'insert tourné vers la matière thermodilatable, entre la butée et la partie plane de l'insert étant au moins en partie comblé d'une partie de comblement correspondante de l'enveloppe, écrasée en appui étanche contre une partie d'appui correspondante de la coupelle.

Le recours à l'ensemble d'un seul tenant précité, qui assure à la fois le guidage du piston par rapport à la coupelle et l'étanchement de la matière thermodilatable vis-à-vis de l'extérieur de l'élément thermostatique, évite d'utiliser et de manipuler les différentes pièces correspondantes des éléments thermostatiques existants, telles que le guide, le diaphragme, le tampon et la rondelle évoqués plus haut. Le long d'une ligne d'assemblage automatique, la mise en place de cet ensemble d'un seul tenant ne représente qu'une seule opération. En outre, à la différence des différentes pièces de faibles dimensions précitées, cet ensemble présente une dimension globale relativement grande, ce qui facilite sa manipulation par des robots ou des automates analogues, dont les contraintes de fonctionnement sont moindres que celles liées à des automates à haute précision. Il en résulte que l'élément thermostatique selon l'invention présente un coût de fabrication moindre que les éléments existants.

De plus, la présence de la butée saillante permet, lors de l'assemblage de l'élément thermostatique selon l'invention, de maîtriser de manière rigoureuse, à la fois, le positionnement de l'ensemble d'un seul tenant par rapport à la coupelle et l'écrasement de la partie de comblement : comme cette partie de comblement occupe l'espace coudé délimité par la butée, on contrôle le taux d'écrasement de cette partie de comblement lorsque la butée est positionnée et amenée en appui contre la partie d'appui correspondante de la coupelle, cette mise en appui étant aisément effectuée par un robot ou un automate le long d'une ligne d'assemblage automatisée. En garantissant de la sorte un taux d'écrasement minimal de cette partie de comblement, on s'assure d'un niveau d'étanchéité prédéterminé dans une zone de l'enveloppe soumise à des contraintes internes de pression significatives. La forme coudée de la butée saillante permet avantageusement d'encaisser une partie de cette pression interne.

De plus, l'insert rigide peut avantageusement supporter les contraintes mécaniques résultant du sertissage l'un sur l'autre de la coupelle et de l'insert lors de la fabrication de l'élément thermostatique selon l'invention.

D'autres caractéristiques de cet élément thermostatique, prises isolément ou selon toutes les combinaisons techniquement possibles, sont énoncées aux revendications dépendantes 2 à 16.

L'invention a également pour objet un procédé de fabrication d'un élément thermostatique,
dans lequel on dispose :
- d'une coupelle thermoconductrice partiellement remplie d'une matière thermodilatable,
- d'un piston, et
- d'un insert rigide de guidage de piston,
dans lequel on rapporte le piston en partie à l'intérieur de la coupelle, de sorte que ce piston soit déplaçable le long d'un axe par rapport à la coupelle sous l'action de la matière thermodilatable lors de la dilatation de cette matière,
dans lequel on noie l'insert dans une enveloppe souple, étanche à la matière thermodilatable et adaptée pour être interposée entre l'insert et, d'une part, le piston et, d'autre part, la coupelle, l'insert et l'enveloppe formant un ensemble d'un seul tenant, et
dans lequel on rapporte l'ensemble d'un seul tenant dans la coupelle de sorte qu'une partie de l'enveloppe soit interposée entre l'insert et la coupelle tandis qu'une autre partie de l'enveloppe est interposée entre l'insert et le piston lors de l'assemblage de ce dernier,
caractérisé en ce que, lors de la mise en place de l'ensemble d'un seul tenant dans la coupelle, on positionne cet ensemble par rapport à la coupelle en utilisant une butée de l'insert, qui s'étend en saillie vers la matière thermodilatable depuis une partie sensiblement plane du reste de l'insert suivant une direction sensiblement parallèle à l'axe de déplacement du piston, l'espace délimité, du côté de l'insert tourné vers la matière thermodilatable, entre la butée et la partie plane de l'insert étant au moins en partie comblé d'une partie de comblement correspondante de l'enveloppe,
et en ce que, après la mise en place de l'ensemble d'un seul tenant dans la coupelle, on écrase axialement cette partie de comblement en appui étanche contre une partie d'appui correspondante de la coupelle, en sertissant la butée et la coupelle l'une sur l'autre.

L'invention sera mieux comprise à la lecture de la description qui va suivre, donnée uniquement à titre d'exemple et faite en se référant aux dessins sur lesquels :
- la figure 1 est une coupe longitudinale d'un élément thermostatique selon l'invention ;
- la figure 2 est une vue analogue à la figure 1, d'une partie de l'élément thermostatique, à l'état non assemblé ; et
- les figures 3 et 4 sont des vues analogues à la figure 1, de deux autres modes de réalisation de l'élément thermostatique selon l'invention.

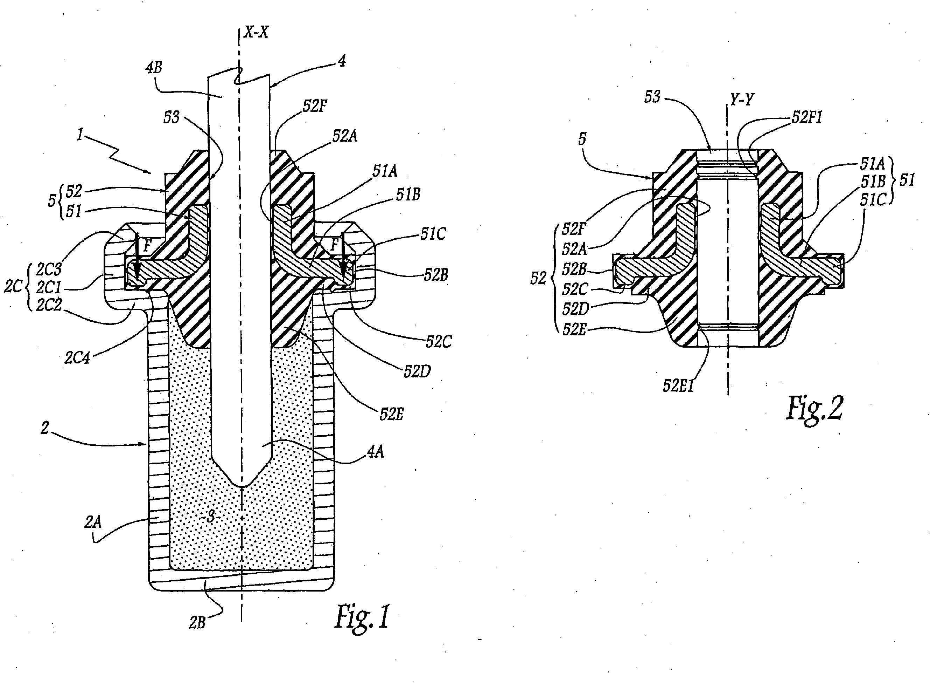

Sur la figure 1 est représenté un élément thermostatique 1 comportant :
- une coupelle métallique 2 de forme générale cylindrique à base circulaire et d'axe longitudinal X-X,
- de la cire thermodilatable 3 stockée dans la coupelle 2 et éventuellement chargée d'une poudre présentant une bonne conductibilité thermique, par exemple une poudre de cuivre,
- un piston métallique 4 globalement cylindrique et sensiblement coaxial à la coupelle 2, dont une partie d'extrémité 4A plonge dans la cire 3 tandis que sa partie d'extrémité opposée 4B n'est que partiellement représentée ; ce piston est déplaçable en translation le long de l'axe X-X par rapport à la coupelle sous l'action de la cire lors de la dilatation de cette dernière, et
- un ensemble 5 d'un seul tenant, adapté pour à la fois guider en translation le piston 4 par rapport à la coupelle 2 et étancher la cire 3 vis-à-vis de l'extérieur de l'élément thermostatique 1.

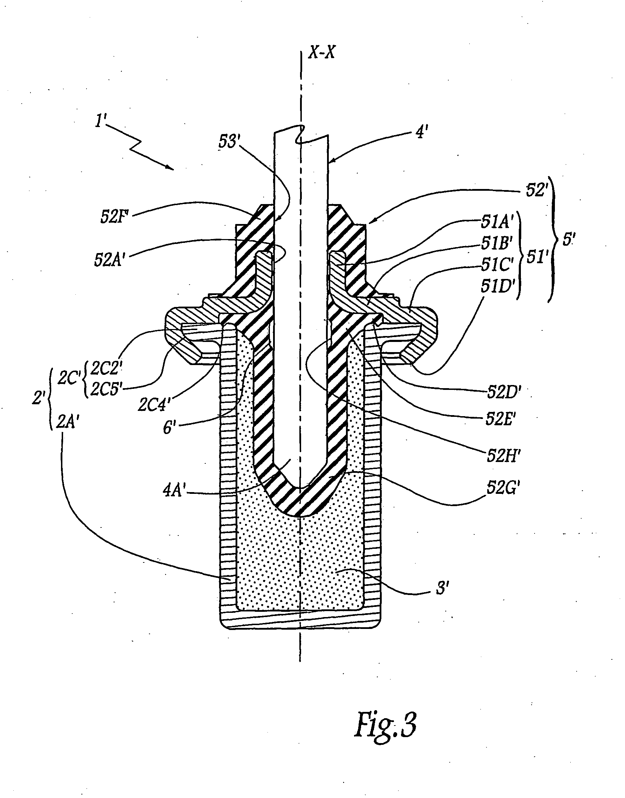

Par commodité, la suite de la description sera orientée en considérant que les termes « inférieur » et « bas » désignent une direction dirigée vers la partie basse des figures 1 et 2, tandis que les termes « supérieur » et « haut » désignent une direction opposée. Il en est de même vis-à-vis de la figure 3.

La coupelle 2 comporte un fût tubulaire 2A centré sur l'axe X-X, qui, à son extrémité inférieure, est fermée par une paroi de fond 2B, tandis qu'à son extrémité supérieure, le fût est ouvert sur l'extérieur en formant une collerette d'extrémité 2C. La cire 3 est stockée dans la partie inférieure fermée du fût 2A, la partie haute du fût étant obturée par la partie d'extrémité 4A du piston 4 et par l'ensemble 5. La collerette 2C est constituée d'un corps annulaire 2C1 centré sur l'axe X-X, qui, en partie basse, est venu de matière avec le fût 2A en formant un épaulement 2C2 et qui, en partie haute, est pliée vers le haut de manière convergente vers l'axe X-X, en formant un bord extrême incliné 2C3.

L'ensemble 5 comporte essentiellement un insert rigide 51, notamment métallique, et une enveloppe souple 52 réalisée d'une seule pièce qui noie en totalité l'insert 51. Cette enveloppe 52 est réalisée en un matériau étanche à la cire 3, par exemple en caoutchouc, en nitrile, en nitrile hydrogéné ou en un mélange de ces matériaux. A la figure 1, l'ensemble 5 est assemblé au reste de l'élément thermostatique 1 tandis qu'à la figure 2, cet ensemble est à l'état libre, c'est-à-dire que l'ensemble est prêt à être assemblé au reste des constituants de l'élément thermostatique.

L'insert 51 et l'enveloppe 52 présentent des formes respectives de révolution autour d'un axe longitudinal Y-Y confondu avec l'axe X-X à la figure 1. Globalement, l'ensemble 5 délimite intérieurement un passage traversant 53 sensiblement cylindrique, centré sur l'axe Y-Y et adapté pour recevoir, de manière coulissante et étanche, le piston 4, comme à la figure 1.

Plus précisément, l'insert 51 comporte, en s'éloignant de l'axe Y-Y, un anneau supérieur 51A coaxial à l'axe Y-Y, une bride intermédiaire 51B sensiblement plane et qui s'étend dans un plan sensiblement perpendiculaire à l'axe Y-Y, et un bord annulaire inférieur 51C coaxial à l'axe Y-Y. Ce bord 51C s'étend ainsi en saillie vers le bas depuis la périphérie de la bride 51B, suivant une direction sensiblement parallèle à l'axe. L'anneau, la bride et le bord forment une seule et même pièce, centrée sur l'axe Y-Y. L'anneau 51A présente un diamètre interne légèrement supérieur au diamètre externe du piston 4 de sorte que, à l'état assemblé de l'élément 1, le piston est reçu à l'intérieur de l'anneau avec interposition d'une partie correspondante 52A de l'enveloppe 52 qui recouvre intérieurement l'anneau. A l'état assemblé de l'élément 1, la bride 51B s'étend, en s'éloignant de l'axe X-X, presque jusqu'au corps annulaire 2C1 de la collerette 2C, de sorte que la partie externe de la face inférieure de cette bride s'étend sensiblement parallèlement à la partie interne de la face supérieure de l'épaulement 2C2 de la collerette. Le bord 51C présente un diamètre externe légèrement inférieur au diamètre interne du corps annulaire 2C1, de sorte que l'insert 51 est centré à l'intérieur de la collerette 2C avec interposition radiale d'une partie correspondante 52B de l'enveloppe souple 52. De même, une partie 52C de l'enveloppe 52 est axialement interposée entre le bord 51C de l'insert 51 et la partie externe de la face supérieure de l'épaulement 2C2 de la collerette 2C.

L'espace inférieur délimité entre le bord 51C et la bride 51B est comblé d'une partie 52D de l'enveloppe 52. A l'état libre de l'ensemble 5, cette partie d'enveloppe 52D s'étend en saillie vers le bas par rapport à la partie d'enveloppe adjacente 52C, comme représenté à la figure 2, alors qu'à l'état assemblé de l'élément 1, ces deux parties d'enveloppe 52C et 52D sont en affleurement l'une de l'autre, en appui pressé contre la face supérieure de l'épaulement 2C2 de la collerette 2C. En pratique, la partie d'enveloppe 52D est axialement écrasée contre l'épaulement 2C2 lors de l'assemblage de l'ensemble 5, cet écrasement, typiquement de l'ordre de 40%, étant dimensionné pour garantir un étanchement fiable entre l'enveloppe 52 et la coupelle 2.

Avantageusement, dans la zone d'écrasement de la partie d'enveloppe 52D, la face supérieure de l'épaulement 2C2 est creusée d'une rainure annulaire 2C4 centrée sur l'axe X-X et comblée par la partie d'enveloppe 52D lors de l'assemblage de l'ensemble 5, pour améliorer l'étanchement.

De part et d'autre, suivant l'axe Y-Y, de l'insert 51, l'enveloppe 52 forme un bourrelet inférieur 52E et un bourrelet supérieur 52F. Ces bourrelets 52E, 52F s'étendent dans le prolongement de la partie d'enveloppe 52A, respectivement vers le bas et vers le haut, de sorte que la paroi délimitant le passage 53 est entièrement constituée du matériau de l'enveloppe 52, ce passage étant délimité successivement par, de bas en haut, le bourrelet 52E, la partie d'enveloppe 52A et le bourrelet supérieur 52F. Lorsque le piston 4 est reçu dans ce passage 53, le bourrelet inférieur 52E étanche la cire 3 vis-à-vis du piston 4, la pression régnant dans la cire pouvant atteindre 200 bar, tandis que le bourrelet supérieur 52F étanche le piston vis-à-vis de l'extérieur de l'élément thermostatique, notamment vis-à-vis d'un fluide dans lequel peut baigner l'élément thermostatique 1, en particulier lorsque la température de ce fluide est relativement basse, ce qui facilite l'introduction de fluide entre le piston et la paroi du passage 53.

Pour renforcer leur étanchéité, les bourrelets 52E et 52F sont munis de nervures annulaires respectives 52E1, 52F1, qui s'étendent en saillie du reste de la paroi délimitant le passage 53, en direction de l'axe Y-Y.

La fabrication de l'élément thermostatique 1 est la suivante.

Dans un premier temps, on fabrique l'ensemble 5, indépendamment des autres constituants de l'élément thermostatique 1. Pour ce faire, l'insert 51 est de préférence obtenu par emboutissage d'une tôle métallique. En variantes, l'insert est conformé par usinage ou matriçage. L'insert 51 est ensuite noyé dans l'enveloppe 52, notamment en utilisant un moule qui confère à l'enveloppe 52 ses contours à l'état libre tels que représentés à la figure 2. Le moule utilisé est en particulier prévu pour obtenir les nervures 52E1 et 52F1, les bourrelets 52E et 52F, ainsi que les différentes parties d'enveloppe 52A à 52D autour de l'insert 51.

Dans un second temps, après que la coupelle 2 ait été remplie de cire 3, l'ensemble 5 est assemblé à la coupelle 2, la mise en place de cet ensemble étant facilement obtenue par la coopération de formes entre le bord 51C de l'insert 51 et le corps annulaire 2C1 de la collerette 2C. On comprend ainsi que le bord 51C forme une butée de positionnement de l'ensemble 5 par rapport à la coupelle 2 et assure le centrage de l'ensemble 5 sur la coupelle 2 en rendant les axes X-X et Y-Y sensiblement confondus.

La mise en place de l'ensemble 5 est réalisée alors que le bord supérieur 2C3 du corps annulaire 2C1 n'est pas plié comme à la figure 1. En revanche, une fois cette mise en place effectuée, l'extrémité supérieure de ce corps 2C1 est pliée jusque dans sa configuration de la figure 1, en étant sertie autour du bord 51C de l'insert 51 qui supporte ainsi efficacement les efforts mécaniques et les contraintes liés au sertissage.

Lors du sertissage, la partie d'enveloppe 52D est axialement écrasée contre l'épaulement 2C2 de la collerette 2C, comme indiqué par la flèche F, jusqu'à prendre la configuration de la figure 1. On comprend que ce sertissage conduit à contraindre axialement le bord 51C en direction de l'épaulement 2C2, ce qui écrase la partie d'enveloppe 52D, jusqu'à ce que le bord butte axialement contre cet épaulement, avec les parties d'enveloppe 52C et 52D axialement interposées. La mise en butée axiale du bord 51C contre l'épaulement 2C2 est franc car ce dernier est plan et s'étend perpendiculairement à l'axe X-X. De cette façon, le taux d'écrasement de la partie d'enveloppe 52D est facilement et efficacement maîtrisé, y compris le long d'une ligne d'assemblage automatisée. L'étanchement de la cire 3 est ainsi garanti de manière fiable et répétitive.

Le piston 4 est ensuite introduit dans le passage 53 de l'ensemble 5 déjà positionné sur la coupelle 2, jusqu'à ce que sa partie d'extrémité 4A plonge dans la cire 3.

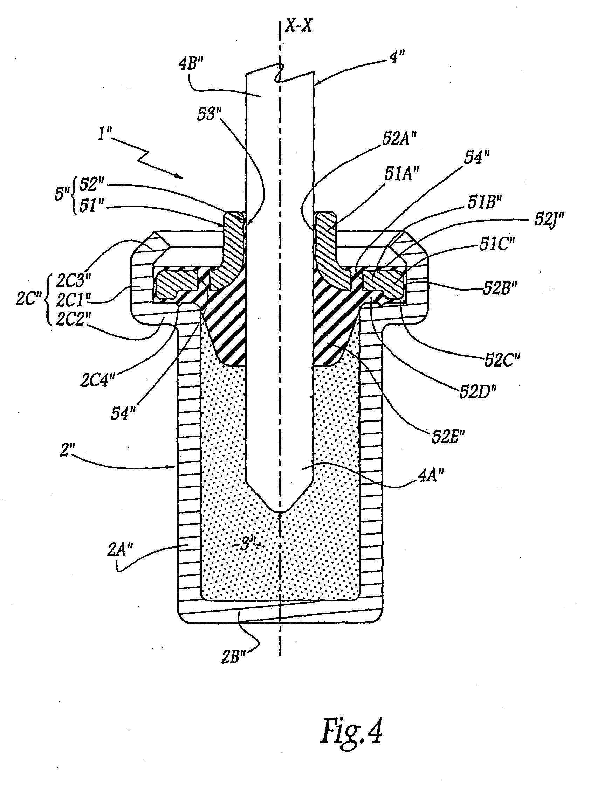

Aux figures 3 et 4 sont respectivement représentés deux éléments thermostatiques 1' et 1'', variantes de l'élément thermostatique 1 de la figure 1. Ces éléments thermostatiques 1' et 1'' comportent de nombreux composants identiques à ceux de l'élément 1, ces composants portant les mêmes références alphanumériques que celles des figures 1 et 2, respectivement suivies d'un prime (') et d'une seconde ('').

L'élément 1' de la figure 3 se distingue de l'élément 1 au niveau, d'une part, de la zone inférieure de l'enveloppe 52' et, d'autre part, de la zone de jonction sertie entre son insert 51' et sa coupelle 2'.

En ce qui concerne la zone inférieure de l'enveloppe 52', la variante de la figure 3 consiste à, par rapport à l'élément 1 des figures 1 et 2, prolonger vers le bas l'enveloppe souple 52', au-delà du bourrelet inférieur 52E', de manière à ce que l'enveloppe s'étende tout autour et au-dessous de la partie d'extrémité inférieure 4A' du piston 4'. Ce prolongement de matière forme ainsi un doigt de gant borgne 52G' et s'apparente à une structure couramment appelée « squeeze push » dans le domaine des éléments thermostatiques. Le doigt de gant 52G' obture le passage 53' au niveau de son extrémité inférieure et reçoit la partie d'extrémité inférieure 4A' du piston 4', en étant interposée entre le piston et la cire 3'.

L'ajout du doigt de gant 52G' dans la variante de la figure 3 assure un meilleur fonctionnement de l'élément 1'. à haute pression.

En outre, de manière optionnelle, de la graisse 6' destinée à faciliter le coulissement du piston 4' dans le passage 53' peut alors être stockée au niveau d'un évidement annulaire 52H' creusé dans la paroi de l'enveloppe 52' délimitant le passage 53', au-dessous du niveau de l'insert 51'.

En ce qui concerne la zone de jonction entre l'insert 51' et la coupelle 2', contrairement à la collerette 2C de la coupelle 2 de l'élément 1, la collerette 2C' ne prolonge pas vers le haut le fût 2A' de la coupelle 2' par un corps annulaire tel que le corps 2C1 de la collerette 2C, mais n'est constituée que d'un épaulement 2C2' analogue à l'épaulement 2C2 de la coupelle 2C. Le chant d'extrémité 2C5' de cet épaulement 2C2' est évasé en convergeant vers le bas.

De plus, contrairement au bord 51C de l'insert 51 de l'élément 1, le bord 51C' de l'insert 51' s'étend radialement au-delà de la coupelle 2, en s'éloignant de l'axe X-X, puisque cet insert 51' présente une forme coudée vers le bas dont le diamètre interne est sensiblement égal au diamètre externe maximal de l'épaulement 2C2' de la coupelle 2' et dont la partie d'extrémité libre 51D' est rabattue vers l'axe X-X, contre le chant 2C5' de l'épaulement 2C2'. Avant assemblage de l'ensemble 5' à la coupelle 2', cette partie extrême 51D' présente une forme annulaire qui s'étend dans le prolongement axial du coude vers le bas du bord 51C'. Dans cet état avant assemblage (non représenté), la partie d'enveloppe 52D' est dimentionnée sensiblement comme la partie d'enveloppe 52D de l'enveloppe 52, c'est-à-dire que cette partie d'enveloppe 52D' s'étend en saillie de la bride 51B' plus bas que la face inférieure du bord 51C'. En revanche, contrairement à la zone correspondante de l'enveloppe 52 de l'élément thermostatique 1, aucune partie d'enveloppe ne recouvre cette face inférieure du bord 51C'. Autrement dit, l'enveloppe 52' n'inclut aucune partie analogue aux parties d'enveloppe 52B et 52C de l'enveloppe 52 de l'élément 1. En revanche, comme pour l'élément 1 des figures 1 et 2, l'enveloppe 52' inclut une partie 52A' interposée entre l'insert 51' et le piston 4' et forme, en plus du bourrelet inférieur 52E' et du doigt de gant 52G', un bourrelet supérieur 52F'.

L'assemblage de l'ensemble 5' à la coupelle 2' est analogue à celui de l'ensemble 5 à la coupelle 2 : l'ensemble 5' est rapporté sur la collerette 2C' de la coupelle 2' en introduisant l'épaulement 2C2' de cette collerette à l'intérieur du bord coudé 51C' de l'insert 51', assurant le centrage de l'ensemble 5' par rapport à la coupelle 2' ; puis la partie extrême 51D' de la partie coudée du bord 51C' est sertie autour de l'épaulement 2C2', en étant guidé par le chant d'extrémité arrondi 2C5' de cet épaulement, jusqu'à occuper la configuration inclinée vers le bas et en direction de l'axe X-X représentée à la figure 4. A l'état assemblé de l'ensemble 5', la face supérieure de l'épaulement 2C2' et la face inférieure du bord 51C' sont en contact pressant l'une contre l'autre, sous l'effet du sertissage de la partie extrême 51D'. Le piston 4' est ensuite introduit dans le passage 53' de l'ensemble 5'.

On notera que les aménagements de l'élément 1' relatifs au doigt de gant 52G' et au sertissage de l'insert 51' sur la coupelle 2C' sont indépendants l'un de l'autre et peuvent donc, en variante, être appliqués séparément à l'élément 1 des figures 1 et 2.

L'élément 1'' de la figure 4 se distingue de l'élément 1 des figures 1 et 2 essentiellement par l'absence du bourrelet supérieur 52F. Suivant cette variante, l'enveloppe 52'' est constituée des parties 52A" , 52B'', 52C", 52D" et 52E", respectivement analogues aux parties d'enveloppe 52A, 52B, 52C, 52D et 52E. Le volume de matière constituant l'enveloppe 52" est ainsi plus réduit et le surmoulage de l'insert 51" par cette enveloppe est essentiellement limité à son côté tourné vers la cire thermodilatable 3''.

Pour garantir une tenue mécanique suffisante entre l'enveloppe 52'' et l'insert 51'', la bride plane 51B'' est avantageusement traversée axialement de part en part par plusieurs trous traversants 54'', répartis de préférence de manière sensiblement uniforme suivant la périphérie de cette bride. Ces trous 54" sont par exemple au nombre de 6, deux trous diamétralement opposés étant représentés dans le plan de la figure 4. Lorsque l'insert 51'' est par la suite noyé dans la matière destinée à constitue l'enveloppe 52'', cette matière se répand à l'intérieur des trous 54''. Du côté inférieur de la bride 51B'', l'enveloppe forme, entre autres, la partie de comblement 52D'', au niveau de l'espace coudé délimité conjointement par la bride et le bord de butée 51C", tandis que, du côté supérieur de l'insert, la matière recouvre la surface de la bride jusqu'à rejoindre la partie d'enveloppe latérale 52B" en ne formant qu'un revêtement 52J" de faible épaisseur, c'est-à-dire d'épaisseur analogue à celle de la partie d'enveloppe 52B". En ayant de la matière de part et d'autre de la bride 51B, l'enveloppe est liée mécaniquement à l'insert 51" de manière efficace et fiable. De manière optionnelle, ce lien peut être renforcé par adhérisation.

L'assemblage de l'ensemble 5" à la coupelle 2" est analogue à celui de l'ensemble 5 à la coupelle 2.

Divers aménagements et variantes aux éléments thermostatiques 1, 1' et 1'' décrits ci-dessus, ainsi qu'à leur procédé de fabrication, sont envisageables. A titre d'exemples :
- le piston 4, 4', 4'' peut être au moins partiellement introduit dans le passage 53, 53', 53" de l'ensemble 5, 5', 5'' avant que cet ensemble ne soit mis en placé dans la collerette 2C, 2C', 2C'' ; et/ou
- le piston 4, 4', 4" peut être intérieurement doté d'une résistance électrique chauffante destinée à chauffer par l'intérieur la cire 3, 3', 3'', les conducteurs d'alimentation en électricité de cette résistance s'étendant depuis l'extrémité du piston opposée à celle plongée dans la cire.

## Revendications

1. Elément thermostatique (1 ; 1' ; 1''), comprenant :
- une coupelle thermoconductrice (2 ; 2' ; 2'') contenant une matière thermodilatable (3 ; 3' ; 3''),
- un piston (4 ; 4' ; 4'') déplaçable le long d'un axe (X-X) par rapport à la coupelle sous l'action de la matière thermodilatable lors de la dilatation de cette matière,
- un ensemble d'un seul tenant (5; 5' ; 5") comportant un insert rigide (51 ; 51' ; 51") de guidage du piston (4 ; 4' ; 4") par rapport à la coupelle (2 ; 2' ; 2"), noyé dans une enveloppe souple (52 ; 52' ; 52") étanche à la matière thermodilatable et interposée entre l'insert et, d'une part, le piston et, d'autre part, la coupelle,
**caractérisé en ce que** l'insert (51 ; 51' ; 51") inclut une butée (51C ; 51C' ; 51C'') de positionnement de l'ensemble d'un seul tenant (5 ; 5' ; 5") par rapport à la coupelle (2 ; 2' ; 2''), laquelle butée s'étend en saillie vers la matière thermodilatable (3 ; 3' ; 3") depuis une partie sensiblement plane (51B ; 51B' : 51B") du reste de l'insert suivant une direction sensiblement parallèle à l'axe (X-X) de déplacement du piston (4 : 4' ; 4"), l'espace délimité, du côté de l'insert tourné vers la matière thermodilatable, entre la butée et la partie plane de l'insert étant au moins en partie comblé d'une partie de comblement correspondante (52D ; 52D' ; 52D") de l'enveloppe, écrasée en appui étanche contre une partie d'appui correspondante (2C2 ; 2C2' ; 2C2") de la coupelle.

2. Elément thermostatique suivant la revendication 1, **caractérisé en ce que** la partie d'appui (2C2 ; 2C2' ; 2C2'') de la coupelle (2 ; 2' ; 2") est plane et s'étend de manière sensiblement perpendiculaire à l'axe (X-X) de déplacement du piston (4 ; 4' ; 4'').

3. Elément thermostatique suivant l'une quelconque des revendications précédentes, **caractérisé en ce que** la butée (51C ; 51C' ; 51C") est adaptée pour centrer l'ensemble d'un seul tenant (5 ; 5' ; 5") par rapport à la coupelle (2 ; 2' ; 2"), en coopérant par complémentarité de formes avec une partie associée (2C1 ; 2C2' ; 2C1") de la coupelle, dans laquelle ou autour de laquelle la butée est mise en place.

4. Elément thermostatique suivant la revendication 3, **caractérisé en ce que** la butée (51C ; 51C") est reçue dans la partie associée (2C1 ; 2C1'') de la coupelle (2 ; 2") avec interposition radiale d'une partie (52B ; 52B'') de l'enveloppe (52 ; 52").

5. Elément thermostatique suivant l'une quelconque des revendications précédentes, **caractérisé en ce que** l'écrasement de la partie de comblement (52D ; 52D' 52D") est de l'ordre de 40%.

6. Elément thermostatique suivant l'une quelconque des revendications précédentes, **caractérisé en ce que** la partie d'appui (2C2 ; 2C2' ; 2C2") de la coupelle (2 ; 2' ; 2'') est munie, sur sa face contre laquelle la partie de comblement (52D ; 52D' ; 52D") est écrasée, d'une rainure (2C4 ; 2C4' ; 2C4") comblée par la partie de comblement.

7. Elément thermostatique suivant l'une quelconque des revendications précédentes, **caractérisé en ce que** la butée (51C ; 51C' ; 51C'') forme un bord annulaire sensiblement coaxial au piston (4 ; 4' ; 4").

8. Elément thermostatique suivant l'une quelconque des revendications précédentes, **caractérisé en ce qu'**une partie (2C3 ; 2C2' ; 2C3") de la coupelle (2 ; 2' ; 2'') et la butée (51C ; 51C' ; 51C") sont serties l'une sur l'autre.

9. Elément thermostatique suivant l'une quelconque des revendications précédentes, **caractérisé en ce que** l'enveloppe (52; 52' ; 52") forme, du côté de l'insert (51 ; 51' ; 51") tourné vers la matière thermodilatable (3 ; 3' ; 3"), un premier bourrelet (52E ; 52E' ; 52E'') d'étanchéité vis-à-vis de la matière thermodilatable, appuyé contre le piston (4 ; 4' ; 4").

10. Elément thermostatique suivant l'une quelconque des revendications précédentes, **caractérisé en ce que** l'enveloppe (52 ; 52') forme, du côté de l'insert (51 ; 51') opposé à la matière thermodilatable (3 ; 3'), un second bourrelet (52F ; 52F') d'étanchéité vis-à-vis de l'extérieur de la coupelle (2 ; 2'), notamment vis-à-vis d'un fluide dans lequel baigne l'élément thermostatique (1 ; 1'), appuyé contre le piston (4 ; 4').

11. Elément thermostatique suivant l'une des revendications 9 ou 10, **caractérisé en ce que** le premier (52E ; 52E' ; 52E") et/ou le second (52F ; 52F') bourrelets sont munis, sur leur surface adaptée pour être appuyée contre le piston (4 ; 4' ; 4"), d'au moins une nervure (52E1, 52F1) de renfort de l'étanchéité.

12. Elément thermostatique suivant l'une quelconque des revendications précédentes, **caractérisé en ce que** l'enveloppe (52 ; 52' ; 52") est réalisée en un matériau choisi parmi le caoutchouc, le nitrile, le nitrile hydrogéné ou un mélange de ces matériaux.

13. Elément thermostatique suivant l'une quelconque des revendications précédentes, **caractérisé en ce que** l'insert (51 ; 51' ; 51") délimite une ouverture (53 ; 53' ; 53") de réception et de guidage du piston (4 ; 4' ; 4"), dont la paroi est recouverte par une partie correspondante (52A ; 52A' ; 52A'') de l'enveloppe (52 ; 52' ; 52'').

14. Elément thermostatique suivant l'une quelconque des revendications précédentes, **caractérisé en ce que** l'insert (51 ; 51' ; 51") est conformé essentiellement par emboutissage, usinage ou matriçage.

15. Elément thermostatique suivant l'une quelconque des revendications précédentes, **caractérisé en ce que** l'enveloppe (52') forme un doigt de gant borgne (52G') adapté pour recevoir la partie d'extrémité (4A') du piston (4') tournée vers la matière thermodilatable (3').

16. Elément thermostatique suivant la revendication 15, **caractérisé en ce que** l'enveloppe (52') délimite une réserve (52H') de graisse (6') débouchant sur le piston (4').

17. Procédé de fabrication d'un élément thermostatique (1 ; 1' ; 1''),
dans lequel on dispose :
- d'une coupelle thermoconductrice (2 ; 2' ; 2") partiellement remplie d'une matière, thermodilatable (3 ; 3' ; 3")
- d'un piston (4 ; 4' ; 4"), et
- d'un insert rigide (51 ; 51' ; 51'') de guidage du piston,
dans lequel on rapporte le piston en partie à l'intérieur de la coupelle, de sorte que ce piston soit déplaçable le long d'un axe (X-X) par rapport à la coupelle sous l'action de la matière thermodilatable lors de la dilatation de cette matière,
dans lequel on noie l'insert dans une enveloppe souple (52 ; 52' ; 52") étanche à la matière thermodilatable et adaptée pour être interposée entre l'insert et, d'une part, le piston et, d'autre part, la coupelle, l'insert et l'enveloppe formant un ensemble d'un seul tenant (5 ; 5' ; 5"), et
dans lequel on rapporte l'ensemble d'un seul tenant dans la coupelle de sorte qu'une partie (52B, 52C et 52D ; 52D' ; 52B'', 52C" et 52D") de l'enveloppe soit interposée entre l'insert et la coupelle tandis qu'une autre partie (52A ; 52A' ; 52A") de l'enveloppe est interposée entre l'insert et le piston lors de l'assemblage de ce dernier,
**caractérisé en ce que,** lors de la mise en place de l'ensemble d'un seul tenant (5 ; 5' ; 5") dans la coupelle (2 ; 2' ; 2"), on positionne cet ensemble par rapport à la coupelle en utilisant une butée (51C ; 51C' ; 51C") de l'insert (51 ; 51' ; 51"), qui s'étend en saillie vers la matière thermodilatable (3 ; 3' ; 3'') depuis une partie sensiblement plane (51B ; 51B' ; 51B'') du reste de l'insert suivant une direction sensiblement parallèle à l'axe (X-X) de déplacement du piston (4 ; 4' ; 4"), l'espace délimité, du côté de l'insert tourné vers la matière thermodilatable, entre la butée et la partie plane de l'insert étant au moins en partie comblé d'une partie de comblement correspondante (52D ; 52D' ; 52D") de l'enveloppe (52 ; 52' ; 52"),
et **en ce que**, après la mise en place de l'ensemble d'un seul tenant dans la coupelle, on écrase axialement (flèche F) cette partie de comblement en appui étanche contre une partie d'appui correspondante (2C2 ; 2C2' ; 2C2") de la coupelle, en sertissant la butée et la coupelle l'une sur l'autre.

## Claims

1. A thermostatic element (1; 1'; 1 ") comprising:
- a thermally conductive cup (2; 2'; 2") containing a thermally dilatable material (3, 3'; 3"),
- a piston (4; 4'; 4") displaceable along an axis (X-X) relative to the cup under the action of the thermally dilatable material at the time of dilation of that material,
- a one-piece assembly (5; 5'; 5") comprising a rigid insert (51; 51'; 51 ") for the guidance of the piston (4; 4'; 4") relative to the cup (2; 2'; 2"), shrouded in a supple envelope (52; 52'; 52") sealing the thermally dilatable material and interposed between the insert and, on one hand, the piston and, on the other hand, the cup,
**characterized in that** the insert (51; 51'; 51") includes an abutment (51C; 51C'; 51C") for positioning the one-piece assembly (5; 5'; 5") relative to the cup, which abutment projects in a sense towards the thermally dilatable material (3, 3'; 3") from a substantially planar part (51B; 51B'; 51B") of the rest of the insert following a direction substantially parallel to the axis of displacement of the piston (4; 4'; 4"), the space delimited on the side of the insert towards the thermally dilatable material between the abutment and the planar part of the insert being at least in part filled with a corresponding filler part (52D, 52D'; 52D") of the envelope, pressed into engagement with a corresponding engagement part (2C2; 2C2'; 2C2") of the cup.

2. A thermostatic element according to claim 1, **characterized in that** the engagement part (2C2; 2C2'; 2C2") of the cup (2; 2'; 2") is planar and extends substantially perpendicularly to the axis of displacement of the piston (4; 4'; 4").

3. A thermostatic element according to either of the foregoing claims, **characterized in that** the abutment (51C; 51C'; 51C") is adapted to centre the one-piece assembly (5; 5'; 5") with respect to the cup (2; 2'; 2") in cooperation by virtue of complementary shapes with an associated part (2C1; 2C1'; 2C1") of the cup, in or around which part the abutment is disposed.

4. A thermostatic element according to claim 3, **characterized in that** the abutment (51C; 51C") is received in the associated part (2C1; 2C1") of the cup with the radial interposition of a part (52B; 52B" of the envelope (52; 52").

5. A thermostatic element according to any one of the foregoing claims, **characterized in that** the compression of the filler part (52D; 52D'; 52D") is of the order of 40%.

6. A thermostatic element according to any one of the foregoing claims, **characterized in that** engagement part (2C2; 2C2'; 2C2") of the cup (2; 2'; 2") is provided, on the face against which the filler part (52D; 52D'; 52D") is pressed, with a groove (2C4; 2C4'; 2C4") filled with the filler part.

7. A thermostatic element according to any one of the forgoing claims, **characterized in that** the abutment (51C; 51C'; 51C") forms an annular rim substantially coaxial with the piston (4; 4'; 4").

8. A thermostatic element according to any one of the forgoing claims, **characterized in that** a part (2C3; 2C3'; 2C3") of the cup (2; 2'; 2") and the abutment (51C; 51C'; 51C") are crimped together.

9. A thermostatic element according to any one of the foregoing claims, **characterized in that** the envelope (52; 52'; 52") forms on the side of the insert (51; 51'; 51") turned towards the thermally dilatable material (3; 3'; 3") a first sealing ring (52E; 52E'; 52E") with respect to the thermally dilatable material, engaged with the piston (4; 4'; 4").

10. A thermostatic element according to any one of the foregoing claims, **characterized in that** the envelope (52; 52') forms, on the opposite side of the insert (51; 51') from the thermally dilatable material (3; 3'), a second sealing ring (52F; 52F') with respect to the exterior of the cup, particularly with respect to a fluid in which the thermostatic element (1) is immersed, engaged with the piston.

11. A thermostatic element according to claim 9 or 10 , **characterized in that** the first (52E; 52E'; 52E") and/or the second (52F; 52F') sealing ring is provided on its surface adapted to be pressed against the piston (4; 4'; 4") with an auxiliary sealing rib (52E1; 52F1).

12. A thermostatic element according to any one of the foregoing claims, **characterized in that** the envelope (52; 52'; 52") is made from a material chosen from rubber, nitrile, hydrogenated nitrile or a mixture of these materials

13. A thermostatic element according to any one of the foregoing claims, **characterized in that** the insert (51; 51'; 51 ") delimits an opening (53; 53'; 52") for the reception and guidance of the piston (4; 4'; 4") of which the surface is covered by a corresponding part (52A; 52A'; 52A") of the envelope (52; 52'; 52").

14. A thermostatic element according to any one of the foregoing claims, **characterized in that** the insert (51; 51'; 52") is shaped by stamping, machining or moulding.

15. A thermostatic element according to any one of the foregoing claims, **characterized in that** the envelope (52') forms a closed finger of a glove (52G') adapted to receive the end part of the piston (4') facing the thermally dilatable material (3').

16. A thermostatic element according to claim 15, **characterized in that** the envelope (52') defines a grease reservoir (6') open to the piston.

17. Method for making a thermostatic element (1; 1'; 1"), in which are disposed:
- a thermally conductive cup (2; 2'; 2"), partially filled with a thermally dilatable material (3; 3'; 3")
- a piston (4; 4'; 4") and
- a rigid insert (51; 51' 52") for the guidance of the piston,
in which the piston is supported partly in the interior of the cup such that the piston is displaceable along an axis (X-X) relative to the cup under the action of the thermally dilatable material at the time of dilation of that material;
in which the insert is shrouded in a supple envelope (52; 52'; 52") sealing against the thermally dilatable material and adapted to be interposed between the insert and on one hand the piston and on the other hand the cup, the insert and the envelope forming a one-piece assembly (5; 5'; 5"), and
in which the one-piece assembly is supported in the cup by a part (52B, 52C and 52D; 52D'; 52B", 52C" and 52D") of the envelope interposed between the cup whereas another part (52A; 52A'; 52A") of the envelope is interposed between the insert and the piston when these latter are assembled,
**characterized in that** on the disposition of the one-piece assembly (5; 5'; 5") in the cup (2; 2'; 2") this assembly is positioned relative to the cup by means of an abutment (51C; 51C'; 51C") from the insert (51; 51'; 51"), which abutment projects in a sense towards the thermally dilatable material (3; 3'; 3") from a substantially planar part (51 B; 51B'; 51B") of the rest of the insert following a direction substantially parallel to the axis (X-X) of displacement of the piston (4; 4'; 4"), the space delimited, on the side of the insert towards the thermally dilatable material, between the abutment and the planar part of the insert being at least in part filled with a corresponding filler part (52D; 52D'; 52D") of the envelope (52; 52'; 52"),
and **in that** after the location of the one-piece assembly in the cup, the filler part is axially compressed (arrow A) in sealing engagement against an engagement part (2C2; 2C2'; 2C2") of the cup, while crimping the abutment and the cup together.

## Patentansprüche

1. Thermostatisches Element (1; 1'; 1"), das folgendes aufweist:
- einen wärmeleitenden Topf (2; 2'; 2"), der ein wärmeausdehnungsfähiges Material (3; 3'; 3") enthält,
- einen Kolben (4; 4'; 4"), der bei der Ausdehnung des wärmeausdehnungsfähigen Materials unter der Einwirkung dieses Materials entlang einer Achse (X-X) in Bezug auf den Topf verschiebbar ist,
- eine einstückige Anordnung (5; 5'; 5") mit einem starren Einsatz (51; 51'; 51") zum Führen des Kolbens (4; 4'; 4") in Bezug auf den Topf (2; 2'; 2"), der in einer flexiblen, gegen das wärmeausdehnungsfähige Material dichten Ummantelung (52; 52'; 52") eingebettet ist, die zwischen dem Einsatz und dem Kolben einerseits sowie dem Topf andererseits angeordnet ist,
**dadurch gekenntzeichnet,**
**daß** der Einsatz (51; 51'; 5 1 ") einen Anschlag (51C; 51C'; 51C") zum Positionieren der einstückigen Anordnung (5; 5'; 5") in Bezug auf den Topf (2; 2'; 2") aufweist, wobei sich der Anschlag von einem im wesentlichen ebenen Teil (51B; 51B'; 51B") des Restes des Einsatzes in einer zu der Achse (X-X) der Verlagerung des Kolbens (4; 4'; 4") im wesentlichen parallelen Richtung zu dem wärmeausdehnungsfähigen Material (3; 3'; 3") hin vorstehend erstreckt, wobei der Raum, der auf der dem wärmeausdehnungsfähigen Material zugewendeten Seite des Einsatzes zwischen dem Anschlag und dem ebenen Teil des Einsatzes begrenzt ist, zumindest zum Teil von einem entsprechenden Füllteil (52D; 52D'; 52D") der Ummantelung ausgefüllt ist, das in abdichtender Anlage gegen ein entsprechendes Anlageteil (2C2; 2C2'; 2C2") des Topfes gequetscht ist.

2. Thermostatisches Element nach Anspruch 1,
**dadurch gekennzeichnet,**
**daß** das Anlageteil (2C2; 2C2'; 2C2") des Topfes (2; 2'; 2") eben ist und sich im wesentlichen senkrecht zur Achse (X-X) der Verlagerung des Kolbens (4; 4'; 4") erstreckt.

3. Thermostatisches Element nach einem der vorherigen Ansprüche,
**dadurch gekennzeichnet,**
**daß** der Anschlag (51C; 51C'; 51C") dazu ausgelegt ist, die einstückige Anordnung (5; 5'; 5") in Bezug auf den Topf (2; 2'; 2") zu zentrieren, indem er mittels komplementärer Formgebung mit einem zugeordneten Teil (2C1; 2C2'; 2C1") des Topfes zusammenwirkt, in dem bzw. um das der Anschlag herum angeordnet ist.

4. Thermostatisches Element nach Anspruch 3,
**dadurch gekennzeichnet,**
**daß** der Anschlag (51C; 51C") in dem zugeordneten Teil (2C1; 2C1") des Topfes (2; 2") aufgenommen ist, wobei ein Teil (52B; 52B") der Ummantelung (52; 52") in radialer Richtung zwischen diesen angeordnet ist.

5. Thermostatisches Element nach einem der vorherigen Ansprüche,
**dadurch gekennzeichnet,**
**daß** die Quetschung des Füllteils (52D; 52D'; 52D") in der Größenordnung von 40 % liegt.

6. Thermostatisches Element nach einem der vorherigen Ansprüche,
**dadurch gekennzeichnet,**
**daß** das Anlageteil (2C2; 2C2'; 2C2") des Topfes (2; 2'; 2") auf seiner Fläche, gegen die der Füllteil (52D; 52D'; 52D") gequetscht ist, mit einer Nut (2C4; 2C4'; 2C4") versehen ist, die von dem Füllteil ausgefüllt ist.

7. Thermostatisches Element nach einem der vorherigen Ansprüche,
**dadurch gekennzeichnet,**
**daß** der Anschlag (51C; 51C'; 51C") einen ringförmigen Rand bildet, der mit dem Kolben (4; 4'; 4") im wesentlichen koaxial ausgebildet ist.

8. Thermostatisches Element nach einem der vorherigen Ansprüche,
**dadurch gekennzeichnet,**
**daß** ein Teil (2C3; 2C2'; 2C3") des Topfes (2; 2'; 2") und der Anschlag (51C; 51C'; 51C") um einander herumgelegt sind.

9. Thermostatisches Element nach einem der vorherigen Ansprüche,
**dadurch gekennzeichnet,**
**daß** die Ummantelung (52; 52'; 52") auf der dem wärmeausdehnungsfähigen Material (3; 3'; 3") zugewendeten Seite des Einsatzes (51; 51'; 51") einen ersten, gegen den Kolben (4; 4'; 4") anliegenden Wulst (52E; 52E'; 52E") zur Abdichtung gegen das wärmeausdehnungsfähige Material bildet.

10. Thermostatisches Element nach einem der vorherigen Ansprüche,
**dadurch gekennzeichnet,**
**daß** die Ummantelung (52; 52') auf der dem wärmeausdehnungsfähigen Material (3; 3') entgegengesetzten Seite des Einsatzes (51; 51') einen zweiten, gegen den Kolben (4; 4') anliegenden Wulst (52F; 52F') zur Abdichtung gegen das Äußere des Topfes (2; 2') bildet, insbesondere gegen ein Fluid, in welches das thermostatische Element (1; 1') eintaucht.

11. Thermostatisches Element nach einem der Ansprüche 9 oder 10,
**dadurch gekennzeichnet,**
**daß** der erste Wulst (52E; 52E'; 52E") und/oder der zweite Wulst (52F; 52F') auf der für die Anlage gegen den Kolben (4; 4'; 4") ausgelegten Oberfläche mit mindestens einer Rippe (52E1, 52F1) zum Verstärken der Dichtfunktion versehen sind.

12. Thermostatisches Element nach einem der vorherigen Ansprüche,
**dadurch gekennzeichnet,**
**daß** die Ummantelung (52; 52'; 52") aus einem Werkstoff hergestellt ist, der aus Kautschuk, Nitril, hydrogeniertem Nitril oder einer Mischung dieser Werkstoffe ausgewählt ist.

13. Thermostatisches Element nach einem der vorherigen Ansprüche,
**dadurch gekennzeichnet,**
**daß** der Einsatz (51; 51'; 51") eine Öffnung (53; 53'; 53") zum Aufnehmen und Führen des Kolbens (4; 4'; 4") begrenzt, deren Wand von einem entsprechenden Teil (52A; 52A'; 52A") der Ummantelung (52; 52'; 52") bedeckt ist.

14. Thermostatisches Element nach einem der vorherigen Ansprüche,
**dadurch gekennzeichnet,**
**daß** der Einsatz (51; 51'; 51") im wesentlichen durch Tiefziehen, spanende Bearbeitung oder Gesenkformen geformt ist.

15. Thermostatisches Element nach einem der vorherigen Ansprüche,
**dadurch gekennzeichnet,**
**daß** die Ummantelung (52') eine Kapselung (52G') bildet, die dazu ausgelegt ist, das dem wärmeausdehnungsfähigen Material (3') zugewendeten Endteil (4A') des Kolbens (4') aufzunehmen.

16. Thermostatisches Element nach Anspruch 15,
**dadurch gekennzeichnet,**
**daß** die Ummantelung (52') ein zum Kolben (4') hin offenes Reservoir (52H') mit Schmiermittel (6') begrenzt.

17. Verfahren zur Herstellung eines thermostatischen Elements (1; 1'; 1"), in dem folgendes vorgesehen wird:
- ein wärmeleitender Topf (2; 2'; 2"), der zum Teil mit einem wärmeausdehnungsfähigen Material (3; 3'; 3") gefüllt ist,
- ein Kolben (4; 4'; 4"), und
- ein starrer Einsatz (51; 51'; 51") zum Führen des Kolbens,
wobei der Kolben zum Teil im Inneren des Topfes eingebaut wird, so daß dieser Kolben bei der Ausdehnung des wärmeausdehnungsfähigen Materials unter der Einwirkung dieses Materials entlang einer Achse (X-X) in Bezug auf den Topf verlagerbar ist,
wobei der Einsatz in eine flexible, gegen das wärmeausdehnungsfähige Material dichte Ummantelung (52; 52'; 52") eingebettet wird, die dazu ausgelegt ist, zwischen dem Einsatz und dem Kolben einerseits sowie dem Topf andererseits angeordnet zu werden, wobei der Einsatz und die Ummantelung eine einstückige Anordnung (5; 5'; 5") bilden, und
wobei die einstückige Anordnung derart in den Topf eingebaut wird, daß beim Einsetzen des Kolbens ein Teil (52B, 52C und 52D; 52D'; 52B", 52C" und 52D") der Ummantelung zwischen dem Einsatz und dem Topf angeordnet wird, während ein anderes Teil (52A; 52A'; 52A") der Ummantelung zwischen dem Einsatz und dem Kolben angeordnet ist,
**dadurch gekennzeichnet,**
**daß** die einstückige Anordnung (5; 5'; 5") bei ihrem Anordnen in dem Topf (2; 2'; 2") bezüglich des Topfes mittels eines Anschlags (51C; 51C'; 51C') des Einsatzes (51; 51'; 51") positioniert wird, der sich von einem im wesentlichen ebenen Teil (51B; 51B'; 51B") des Restes des Einsatzes in einer zu der Achse (X-X) der Verlagerung des Kolbens (4; 4'; 4") im wesentlichen parallelen Richtung zu dem wärmeausdehnungsfähigen Material (3; 3'; 3") hin vorstehend erstreckt, wobei der Raum, der auf der dem wärmeausdehnungsfähigen Material zugewendeten Seite des Einsatzes zwischen dem Anschlag und dem ebenen Teil des Einsatzes begrenzt ist, zumindest zum Teil von einem entsprechenden Füllteil (52D; 52D'; 52D") der Ummantelung (52; 52'; 52") ausgefüllt wird,
und **daß** nach dem Anordnen der einstückigen Anordnung in dem Topf durch wechselseitiges Herumlegen des Anschlags um den Topf das Füllteil in axialer Richtung (Pfeil F) in abdichtende Anlage gegen ein entsprechendes Anlageteil (2C2; 2C2'; 2C2") des Topfes gequetscht wird.
